# EUROPEAN PATENT APPLICATION

(11) **EP 4 821 571 A2**
(43) Date of publication of application: **14.10.2026**
(21) Application number: 26200919.4
(22) Date of filing: 21.02.2024
(51) Int. Cl.: A63B 21/00

(54) **OUTPUT DEVICE AND OUTPUT ASSEMBLY**

(30) Priority: 21.02.2023 CN 202310172558; 21.02.2023 CN 202310180437; 21.02.2023 CN 202310203074; 21.02.2023 CN 202310186423; 21.02.2023 CN 202320356894 U; 21.02.2023 CN 202320346128 U; 21.02.2023 CN 202320391256 U; 21.02.2023 CN 202320364243 U; 17.07.2023 CN 202321879489 U; 28.09.2023 CN 202322680388 U
(62) Document number(s) of the earlier application(s) in accordance with Art. 76 EPC: 24759711.5 / 4 672 567
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); YIN, Hang, Shenzhen, 518114 (CN); HE, Jiale, Shenzhen, 518114 (CN); YI, Jiahao, Shenzhen, 518114 (CN); MAI, Jiehong, Shenzhen, 518114 (CN); ZUO, Qianbin, Shenzhen, 518114 (CN)
(74) Representative: De Arpe Tejero, Manuel

(57) **Abstract**

A winding reel (130) and an output device. The winding reel (130) includes: a winding disc (138), having multiple winding positions (1381), where the multiple winding positions (1381) are configured to wind an end of a cable (900), and the end of the cable (900) is fixed to the winding disc (138); and a reel body (136), where the winding disc (138) is mounted on the reel body (136), and the reel body (136) is configured to wind a remaining portion of the cable (900).

## Description

### TECHNICAL FIELD

The present disclosure relates to the technical field of output devices, and in particular, to a winding reel and an output device.

### BACKGROUND

Cable-type output devices are a widely used category of output devices. This type of device usually applies resistance or power to a cable. During use, a user exercises by reciprocally pulling the cable or being driven by the cable. The cable-type output device uses a reel as a storage device for the cable. A cable head of the cable is generally fixed to an end portion of a side of the reel, and then the cable can be wound around an axial direction of the reel, which facilitates retraction and release of the cable.

### SUMMARY OF THE INVENTION

The present disclosure provides a winding reel and an output device.

According to a first aspect of the present disclosure, the winding reel according to an embodiment of the present disclosure includes: a winding disc, having a plurality of winding positions, where the plurality of winding positions may be configured to wind an end of a cable, and the end of the cable may be fixed to the winding disc; and a reel body, where the winding disc may be mounted on the reel body, and the reel body may be configured to wind a remaining portion of the cable.

In some embodiments, the winding disc may include a first side surface and a second side surface opposite to each other, the plurality of winding positions may include a plurality of through holes arranged at intervals, and a corresponding one of the plurality of through holes may be in communication with the first side surface and the second side surface the corresponding one of the plurality of through holes may be configured for the cable to pass through.

In some embodiments, at least one of the following may be satisfied: the plurality of winding positions may further include a plurality of cable channels defined on the first side surface of the winding disc, and both ends of a corresponding one of the plurality of cable channels may be in communication with corresponding two of the plurality of through holes on the first side surface; or the winding positions may further include a plurality of cable channels defined on the second side surface of the winding disc, and both ends of a corresponding one of the plurality of cable channels may be in communication with corresponding two of the plurality of through holes on the second side surface.

In some embodiments, a portion of the plurality of cable channels extends longitudinally, and another portion of the plurality of cable channels extends transversely.

In some embodiments, the corresponding one of the plurality of cable channels may be a groove or a through slot defined on at least one of the first side surface or the second side surface.

In some embodiments, the winding disc may further include a base plate and a plurality of convex plates, the plurality of convex plates may be arranged on the base plate and protrude toward the first side surface or the second side surface, and the corresponding one of the plurality of cable channels may be defined between adjacent ones of the plurality of convex plates.

In some embodiments, at least one of the following may be satisfied: the winding disc may be arc-shaped, the reel body may be provided with a mounting position, and the winding disc may be mounted on the mounting position; or the winding reel may further include a protective cover, the protective cover may be covered on the winding disc, and a cable outlet may be further defined on the protective cover and configured for the cable to pass through; and an outer side of the winding disc or an outer side of the protective cover may be tangent to an outer peripheral surface of the reel body.

In some embodiments, at least one of the following may be satisfied: a side of the protective cover facing the winding disc may be provided with a first protruding portion, and the first protruding portion may be configured to press the cable; or a second protruding portion may be provided on a side of the mounting position facing the winding disc, and the second protruding portion may be configured to press the cable.

In some embodiments, a positioning protrusion may be provided on an inner side of the protective cover, and a positioning groove may be defined on at least one of the winding disc or the mounting position and corresponds to the positioning protrusion.

In some embodiments, the plurality of winding positions may include a plurality of notches defined on opposite sides of the winding disc, and the plurality of notches may be configured to allow an end portion of the cable to be wound around in sequence.

In some embodiments, a cable channel may be defined between adjacent ones of the plurality of notches, and the cable channel may be configured to accommodate the cable.

In some embodiments, the winding disc may include a first side surface and a second side surface opposite to each other; and at least one cable channel may be defined on at least one of the first side surface or the second side surface of the winding disc, and the at least one cable channel may be configured to accommodate the cable.

In some embodiments, at least one of the following may be satisfied: the cable channel may be defined in a zigzag manner; or the cable channel may be defined on each of the first side surface and the second side surface of the winding disc, at least one through via may be further defined on the winding disc or at least one notch may be further defined on a side of the winding disc, and the at least one through via or the at least one notch may be configured to be in communication with the cable channels on each of the first side surface and the second side surface.

In some embodiments, the winding disc may be in a fishbone-like structure.

According to a second aspect of the present disclosure, the output device according to some embodiments of the present disclosure includes: a motor and a battery, where the battery may be electrically connected to the motor and configured to supply power to the motor; and the winding reel according to any one of the foregoing embodiments. The winding reel may be connected to the motor to drive the winding reel to rotate.

Additional aspects and advantages of the present disclosure will be partly given in the following description, and partly will become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the accompanying drawings.
FIG. 1 is a schematic diagram of an output device according to some embodiments of the present disclosure.
FIG. 2 is a perspective structural view of a winding reel according to some embodiments of the present disclosure.
FIG. 3 is an exploded structural view of a winding reel according to some embodiments of the present disclosure.
FIG. 4 is a sectional structural view of a winding reel according to some embodiments of the present disclosure.
FIG. 5 is a structural view of an inner core and a winding reel housing according to some embodiments of the present disclosure.
FIG. 6 is a structural view of a split inner core according to some embodiments of the present disclosure.
FIG. 7 is a schematic diagram of an output device according to some embodiments of the present disclosure.
FIG. 8 is a perspective structural view of a winding reel according to some embodiments of the present disclosure.
FIG. 9 is an exploded structural view of a winding reel according to some embodiments of the present disclosure.
FIG. 10 is an enlarged view of portion IV of a winding reel in FIG. 9.
FIG. 11 is a perspective structural view of a cable-pressing member according to some embodiments of the present disclosure.
FIG. 12 is an overall structural view of a winding apparatus according to an embodiment of the present disclosure.
FIG. 13 is an exploded view of a winding apparatus according to an embodiment of the present disclosure.
FIG. 14 is an overall structural view of a winding disc according to an embodiment of the present disclosure.
FIG. 15 is a schematic diagram of a cable wound on a winding disc according to an embodiment of the present disclosure.
FIG. 16 is another overall structural view of a winding disc according to an embodiment of the present disclosure.
FIG. 17 is another schematic diagram of a cable wound on a winding disc according to an embodiment of the present disclosure.
FIG. 18 is an overall structural view of a protective cover according to an embodiment of the present disclosure.
FIG. 19 is an overall structural view of a winding disc according to another embodiment of the present disclosure.
FIG. 20 is an overall structural view of a winding disc according to another embodiment of the present disclosure.
FIG. 21 is a structural view of a pivoting cable-arranging scheme according to some embodiments of the present disclosure.
FIG. 22 is a schematic diagram of a linkage assembly of the pivoting cable-arranging scheme according to some embodiments of the present disclosure.
FIG. 23 is a schematic diagram of the pivoting cable-arranging scheme and a guiding assembly according to some embodiments of the present disclosure.
FIG. 24 is a schematic diagram of the guiding assembly and an angle detection apparatus according to one embodiment of the present disclosure.
FIG. 25 is a schematic diagram of the guiding assembly and the angle detection apparatus according to another embodiment of the present disclosure.
FIG. 26 is a structural view of a sliding cable-arranging scheme according to some embodiments of the present disclosure.
FIG. 27 is an internal structural view of the sliding cable-arranging scheme according to some embodiments of the present disclosure.
FIG. 28 is a schematic diagram of a cable-guiding assembly of the sliding cable-arranging scheme according to some embodiments of the present disclosure.
FIG. 29 is a schematic diagram of a cable-arranging assembly driven by a power actuator according to some embodiments of the present disclosure.
FIG. 30 is a schematic diagram of a cable-arranging assembly driven by a linkage assembly according to some embodiments of the present disclosure.

### DETAILED DESCRIPTION

Embodiments of the present disclosure are described in detail below, and examples of the embodiments are shown in accompanying drawings, and the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "connect", "connection" should be understood broadly. For example, "connection" may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact by using an additional feature between them. Moreover, a first feature being "above", "upward", and "on" a second feature may include the first feature being directly above and obliquely above the second feature, or only indicate that the first feature has a higher horizontal height than the second feature. A first feature being "below", "beneath" and "underneath" the second feature includes the first feature being directly below and obliquely below the second feature, or only indicate that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and material, but those having ordinary skill in the art may be aware of the application of other processes and/or the use of other materials.

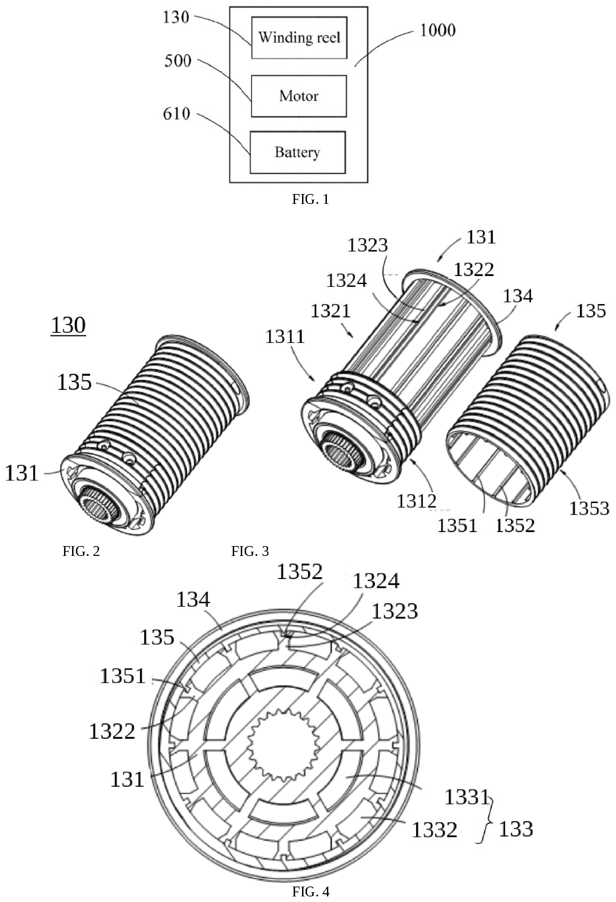

As shown in FIGS. 1-2, an output device according to some embodiments of the present application includes a casing 1000, a motor 500, a battery 610, and a winding reel 130. The battery 610 is electrically connected to the motor 500 and is configured to supply power to the motor 500. The winding reel 130 is rotatably mounted in the casing 1000, and the motor 500 is connected to the winding reel 130 to drive the winding reel 130 to rotate. A cable 900 is wound around the winding reel 130. The output device can drive the winding reel 130 via the motor 500 to wind or release the cable 900 relative to the winding reel 130, such that it may be possible to provide power or resistance to outside, thereby achieving a good fitness effect.

The casing 1000 may be configured to support and fix a plurality of components on the output device. The casing 1000 may have a rectangular shape and may be hollow inside. The winding reel 130 is rotatably mounted in the casing 1000. The cable 900 is wound around the winding reel 130. The cable 900 can extend and retract freely relative to the casing 1000. The motor 500 and the battery 610 are detachably mounted on the casing 1000.

In some embodiments, the motor 500 and the battery 610 may be disposed at two sides of the casing 1000, such that it may be capable of making the overall output device more balanced, which may facilitate the installation and operation of the output device. Of course, some embodiments of the present application do not limit a mounting position of the motor 500 and the battery 610 relative to the casing 1000, as long as the motor 500 is drivingly connected to the winding reel 130 to drive the winding reel 130 to rotate, and the battery 610 is electrically connected to the motor 500 to provide power to the motor 500. The motor 500 may include a servo motor, or the like. The battery 610 may include a lithium battery, or the like. A type of the motor 500 and a type of the battery 610 are not limited herein.

Referring to FIGS. 2-4, in some embodiments, the winding reel 130 includes an inner core 131 and a winding reel housing or a reel shell 135. The winding reel housing 135 is partially or fully disposed around an outer side of the inner core 131. The winding reel housing 135 is configured to wind the cable 900. The thermal conductivity of the winding reel housing 135 is greater than the thermal conductivity of the inner core 131.

The winding reel housing 135 is disposed around the outer side of the inner core 131. Since the thermal conductivity of the winding reel housing 135 is greater than the thermal conductivity of the inner core 131, after the cable 900 is wound on the winding reel housing 135, the cable 900 can quickly conduct heat to dissipate heat, which may help reduce excessive heat generated by long-term friction between the cable 900 and the winding reel 130 from affecting operation of the output device.

Specifically, the inner core 131 may be a cylindrical structure, and a shaft hole may be defined through an axis of the inner core 131, and the spline 573 may be disposed in the shaft hole to be connected to the motor 500, so that the motor 500 can drive the winding reel 130 to rotate. A material of the inner core 131 may include plastic or hard rubber, etc., which not only has good structural strength, but also can effectively reduce overall weight of the winding reel 130.

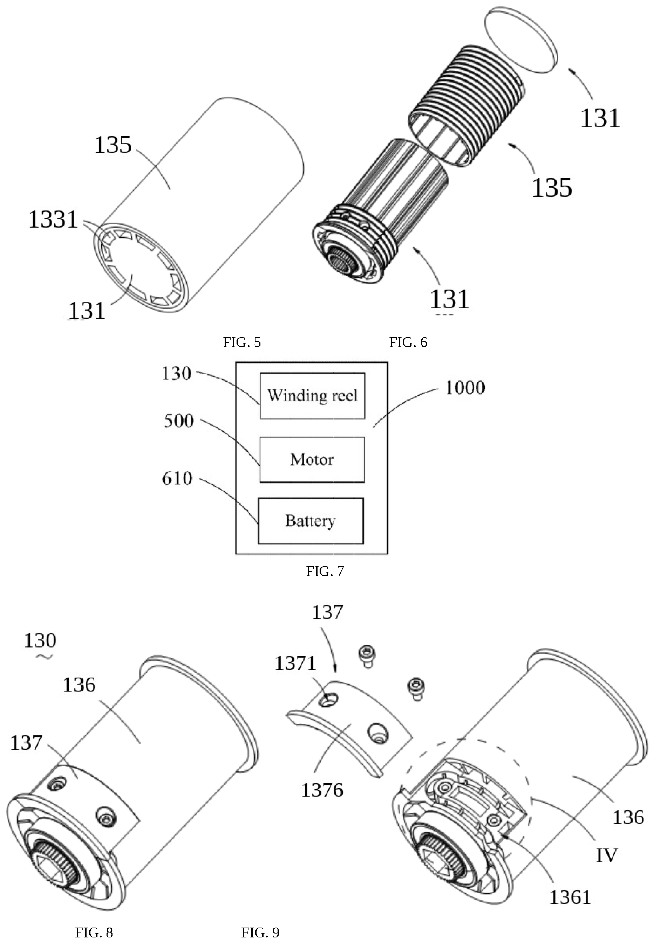

The winding reel housing 135 may be a hollow cylindrical structure, and a diameter of an inner peripheral wall of the winding reel housing 135 may match an outer diameter of the inner core 131, such that the winding reel housing 135 may be fittingly disposed around the outer side of the inner core 131. In some embodiments, as shown in FIG. 5, when the winding reel housing 135 is fully disposed around the outer side of the inner core 131, the cable 900 can be wound on the outer side of the winding reel housing 135, so that heat generated by friction between cables 900 or between the cable 900 and the winding reel housing 135 can be directly conducted to the winding reel housing 135.

In some embodiments, the winding reel housing 135 is partially disposed around the outer side of the inner core 131. Since the inner core 131 can be made of a material such as plastic or hard rubber, etc., it is convenient to process a structure for fixing the cable 900. At this time, an end portion of the cable 900 is fixed to the inner core 131. In some embodiments, the end portion of the cable 900 is fixed to the inner core 131, and a portion of the cable 900 close to the fixing end of the cable 900 is also wound on the inner core 131, and a remaining portion of the cable 900 is wound on the winding reel housing 135. Since when the cable 900 is pulled or retracted on the winding reel 130, a portion farther from or away from the fixing end of the cable 900 is more likely to be stretched frequently, thereby generating more heat. Thus, the winding reel housing 135 is configured to dissipate heat for the portion farther from the fixing end of the cable 900, so that heat from the portion of the cable 900 wound on the winding reel housing 135 can be timely conducted out through the winding reel housing 135.

In some embodiments, the winding reel housing 135 may be made of a metal material with high thermal conductivity such as copper or iron, etc., so that the winding reel housing 135 can better conduct the heat generated by the cable 900 during an extending-retracting process and a friction process. Therefore, the winding reel 130 can better dissipate heat.

Referring to FIGS. 2-4, in some embodiments, a first limiting structure 1322 is disposed on an outer peripheral side of the inner core 131. A second limiting structure 1351 corresponding to the first limiting structure 1322 is disposed on an inner peripheral side of the winding reel housing 135.

Thus, the winding reel housing 135 can be fixed and limited by cooperation of the second limiting structure 1351 with the first limiting structure 1322 on the inner core 131, so as to reduce a situation where the winding reel housing 135 shifts relative to the inner core 131 when the inner core 131 rotates. When the inner core 131 rotates, rotations of the winding reel housing 135 and the inner core 131 are relatively synchronized, such that connection and installation are more stable.

Specifically, the first limiting structure 1322 may be disposed on an outer peripheral wall of the inner core 131. The second limiting structure 1351 may be disposed on the inner peripheral wall of the winding reel housing 135. The first limiting structure 1322 and the second limiting structure 1351 are aligned with each other, so that the winding reel housing 135 can be stably connected and mounted with the inner core 131.

Referring to FIGS. 2-4, in some embodiments, both the first limiting structure 1322 and the second limiting structure 1351 extend along an axial direction of the winding reel 130.

Thus, the first limiting structure 1322 and the second limiting structure 1351 can better cooperate to limit the winding reel housing 135 and the inner core 131, which may help reduce the shifting of the winding reel housing 135 and the inner core 131 relative to each other when the winding reel 130 rotates.

Specifically, the first limiting structure 1322 may extend along an axial direction of the inner core 131. The second limiting structure 1351 corresponds to the first limiting structure 1322 and extends along an axial direction of the winding reel housing 135. When the winding reel 130 rotates, the inner core 131 is driven by the motor 500 to rotate around the axis of the inner core 131, and the first limiting structure 1322 and the second limiting structure 1351 extend axially, so that a force direction between the inner core 131 and the winding reel housing 135 is substantially perpendicular to a rotation direction of the winding reel 130, thereby achieving a better limiting effect. At the same time, when the inner core 131 is assembled with the winding reel housing 135, the inner core 131 and the winding reel housing 135 can be sleeved peripherally, so that the first limiting structure 1322 and the second limiting structure 1351 are engaged with each other peripherally.

Of course, in some other embodiments, the first limiting structure 1322 and the second limiting structure 1351 may also be arranged around a peripheral direction of the inner core 131 and the winding reel housing 135 at a certain angle, or be arranged in other forms, which is not specifically limited in the present disclosure.

Referring to FIGS. 2-4, in some embodiments, the first limiting structure 1322 includes a first connecting rib 1323. The first connecting rib 1323 extends along the axial direction of the inner core 131 and protrudes from an outer peripheral surface of the inner core 131. A second limiting groove 1324 is defined on the first connecting rib 1323.

The second limiting structure 1351 includes a second limiting protrusion 1352. The second limiting protrusion 1352 extends along an axial direction of the winding reel housing 135 and protrudes from an inner peripheral surface of the winding reel housing 135. The second limiting protrusion 1352 is engaged with the second limiting groove 1324.

Thus, the inner core 131 can be limited by cooperation of the first connecting rib 1323 with the second limiting protrusion 1352 on the winding reel housing 135, and the second limiting protrusion 1352 is engaged with the second limiting groove 1324 on the first connecting rib 1323. At the same time, a gap is defined between the winding reel housing 135 and the inner core 131 driven by the first connecting rib 1323 and the second limiting protrusion 1352, thereby effectively improving heat dissipation efficiency of the winding reel housing 135.

Specifically, the first connecting rib 1323 may be protruded on the outer peripheral wall of the inner core 131 and be in a continuous long strip structure, and extend along the axial direction of the inner core 131. In some other embodiments, the first connecting rib 1323 may also be in an intermittent strip structure or a block structure, etc., which is not limited in the present disclosure. The second limiting groove 1324 is defined on a side of the first connecting rib 1323 facing the winding reel housing 135. A shape of the second limiting groove 1324 may match a shape of the second limiting protrusion 1352. The second limiting protrusion 1352 may generally also be in a continuous long strip structure. When the winding reel housing 135 is disposed around the inner core 131, the second limiting protrusion 1352 can be engaged with the second limiting groove 1324.

Since the first connecting rib 1323 is protruded on the outer peripheral wall of the inner core 131, after the winding reel housing 135 is mounted, there will be a certain gap between the winding reel housing 135 and the inner core 131, and a heat dissipation channel 133 may be defined. After the cable 900 is wound on the winding reel housing 135, the heat dissipation channel 133 can accelerate the heat dissipation effect of the winding reel housing 135.

Referring to FIGS. 2-4, in some embodiments, there are a plurality of first connecting ribs 1323 and a plurality of the second limiting protrusions 1352. The plurality of first connecting ribs 1323 are arranged at intervals around a peripheral direction of the nesting portion 1321. The plurality of second limiting protrusions 1352 are arranged at intervals around an inner periphery of the winding reel housing 135. The plurality of first connecting ribs 1323 are in one-to-one correspondence with the plurality of second limiting protrusions 1352.

Thus, the plurality of first connecting ribs 1323 and the plurality of second limiting protrusions 1352 can better support the winding reel housing 135, and a contact area between the winding reel housing 135 and the inner core 131 is larger, resulting in a better heat dissipation effect for the cable 900 on the winding reel housing 135.

Specifically, the plurality of first connecting ribs 1323 may be evenly arranged at intervals around the peripheral direction of the inner core 131. Correspondingly, the plurality of second limiting protrusions 1352 may be evenly arranged at intervals around the inner periphery of the winding reel housing 135. The number of the first connecting ribs 1323 corresponds to the number of the second limiting protrusions 1352, and the present disclosure does not limit the number of the first connecting ribs 1323 and the second limiting protrusions 1352.

Of course, in some other embodiments, the first limiting structure 1322 and the second limiting structure 1351 may also be connected and mounted in other forms. For example, the second limiting groove 1324 is directly defined on the outer peripheral wall of the inner core 131 to be mounted corresponding to the second limiting protrusion 1352 on the winding reel housing 135, etc. The present disclosure does not limit specific structures of the first limiting structure 1322 and the second limiting structure 1351.

Referring to FIGS. 2-5, in some embodiments, a plurality of heat dissipation channels 133 communicating from an end portion to the outside are defined on the outer side of the inner core 131. The plurality of heat dissipation channels 133 are located on an inner side of the winding reel housing 135 and can timely transfer heat from the inner side of the winding reel housing 135 to the outside. In some embodiments, the heat dissipation channel 133 is arranged axially, which is more convenient for heat dissipation in the channel, which may help support the heat dissipation effect, and improve structural stability. In some embodiments, the heat dissipation channel 133 is arranged along a spiral. Through rotation of the winding reel, the heat dissipation channel 133, which is spirally arranged, can drive internal gas/air to generate airflow, thereby actively dissipating heat, and further enhancing the heat dissipation effect. There may be a plurality of heat dissipation channels 133. The multiple heat dissipation channels 133 are arranged at intervals in a peripheral direction of the outer side of the inner core 131.

Specifically, the heat dissipation channel 133 may be a heat dissipation hole 1331. The heat dissipation hole 1331 is defined inside the inner core 131 and in communication with both ends of the inner core 131 adjacent to the outer side. The heat dissipation channel 133 may be a heat dissipation groove 1332. The heat dissipation groove 1332 is defined at the outer side of the inner core 131 and in communication with both ends of the inner core 131. The heat dissipation groove 1332 and the winding reel housing 135 disposed around the outer side of the heat dissipation groove 1332 together enclose to form the heat dissipation channel 133. The heat dissipation channel 133 may be as shown in FIG. 4, the heat dissipation channels 133 formed by the two ways can coexist, at this time, the heat dissipation hole 1331 is located on an inner side of the heat dissipation groove 1332.

Referring to FIGS. 2-4, in some embodiments, the inner core 131 is axially divided into a fixing portion 1311 and a nesting portion 1321 connected to the fixing portion 1311. The fixing portion 1311 is configured to fix the cable 900. The winding reel housing 135 is disposed around the nesting portion 1321. Thus, an end of the cable 900 can be fixed on the fixing portion 1311 and then wound on the winding reel housing 135.

Specifically, the fixing portion 1311 may be disposed at an end of the inner core 131. A cable fixing structure may be disposed on the fixing portion 1311. The end of the cable 900 may be fixedly connected to the fixing portion 1311, and then wound from a fixing end of the cable 900 toward the nesting portion 1321. The nesting portion 1321 is connected to other side of the fixing portion 1311 and is coaxially arranged with the fixing portion 1311. The first limiting structure 1322 may be disposed on an outer peripheral wall of the nesting portion 1321. A length of the winding reel housing 135 may match a length of the nesting portion 1321. The winding reel housing 135 is disposed around an outer side of the nesting portion 1321.

Referring to FIGS. 2-4, in some embodiments, a first winding groove 1312 is defined on an outer peripheral surface of the fixing portion 1311. A second winding groove 1353 is defined on an outer peripheral surface of the winding reel housing 135. When the winding reel housing 135 is disposed around the nesting portion 1321, the outer peripheral surface of the winding reel housing 135 is aligned with the outer peripheral surface of the fixing portion 1311, and an end portion of the first winding groove 1312 close to the nesting portion 1321 is connected to an end portion of the second winding groove 1353.

Thus, when the winding reel housing 135 is mounted on the nesting portion 1321, the outer peripheral surface of the winding reel housing 135 and the outer peripheral surface of the fixing portion 1311 can be flush with each other to form an integral surface, so that the cable 900 can be wound more neatly on an outer peripheral surface of the winding reel 130. Meanwhile, the first winding groove 1312 and the second winding groove 1353 can play a role in facilitating winding the cable to a certain extent, which may further improve flatness of the cable 900 wound outside the winding reel 130, such that it may effectively reduce the knotting or pressing of the cable 900 when winding the cable 900.

Specifically, an outer diameter of the fixing portion 1311 may be larger than an outer diameter of the nesting portion 1321. After the winding reel housing 135 is disposed around the nesting portion 1321, the outer peripheral surface of the winding reel housing 135 can be flush with the outer peripheral surface of the fixing portion 1311, which is beneficial for winding the cable 900 on the winding reel 130. A first winding groove 1312 may be defined on the outer peripheral surface of the fixing portion 1311. The first winding groove 1312 is continuously disposed around a peripheral direction of the fixing portion 1311 and extends toward the nesting portion 1321. A second winding groove 1353 may be defined on the outer peripheral surface of the winding reel housing 135. A starting end of the second winding groove 1353 close to the fixing portion 1311 is connected to a tail end of the first winding groove 1312.

A width of the first winding groove 1312 and a width of the second winding groove 1353 may be set according to a thickness/diameter of the cable 900, and the present disclosure does not limit the width of the first winding groove 1312 and the width of the second winding groove 1353.

After the cable 900 is fixed on the fixing portion 1311, the cable 900 can be first wound along the first winding groove 1312 and then wound along the second winding groove 1353. Therefore, the arrangement of the cable 900 on the winding reel 130 will be more flat and regular, which may help reduce the overlapping and winding together of multiple turns of the cable 900, and reduce an adverse effect on winding and releasing/unwinding the cable 900.

Referring to FIGS. 2-4, in some embodiments, the inner core 131 is formed by injection molding. When the inner core 131 is injection molded, the winding reel housing 135 is placed in a mold to be integrally formed with the inner core 131.

Thus, manufacturing process in which the inner core 131 and the winding reel housing 135 are directly integrally injection-molded through the mold is relatively convenient and efficient, and connection and installation between the winding reel housing 135 and the inner core 131 are also more stable.

Specifically, during a manufacturing process of the winding reel 130, the inner core 131 may be injection-molded first, and then the winding reel housing 135 may be directly injection-molded on the outside of the inner core 131 via the mold, and overall injection molding method is relatively efficient and convenient, which may improve manufacturing efficiency of the winding reel 130. The first winding groove 1312 and the second winding groove 1353 can be continuously defined on the outer peripheral wall of the whole after integral injection molding, which may ensure continuity between the first winding groove 1312 and the second winding groove 1353.

Referring to FIGS. 2-4, in some embodiments, flanges 134 are disposed peripherally on both ends of the inner core 131 outward. The flanges 134 protrude in a direction away from the axis of the inner core 131.

Thus, the flanges 134 on both sides of the inner core 131 can effectively reduce the occurrence of the cable 900 slipping off the winding reel 130 when the cable 900 is wound to an end portion of the inner core 131, which may improve the stability of the cable 900 when winding the cable 900.

Specifically, each of the flanges 134 may be formed as a sheet-like structure protruding around the end portion of the inner core 131 in a direction away from the axis of the inner core 131. Therefore, when the cable 900 is wound to both ends of the winding reel 130, each of the flanges 134 can prevent the cable 900 from slipping, which may enable the cable 900 to be better wound on the winding reel 130. A specific protruding height of each of the flanges 134 may be determined according to the thickness of the cable 900 and a winding height of the cable 900 on the winding reel 130, which is not limited in the present disclosure.

In some embodiments, the inner core 131 is formed as a split manner, and the winding reel housing 135 is detachably disposed around the outer side of the inner core 131. Thus, the winding reel housing 135 can be detached and replaced from the inner core 131, which may facilitate maintenance and replacement when the winding reel housing 135 is damaged.

Specifically, as shown in FIG. 6, the inner core 131 may be configured as a split structure, that is, two split parts of the inner core 131 can be connected and detached by means of screwing or engaging, etc. When the winding reel housing 135 needs to be replaced or detached, the two split parts of the inner core 131 can be separated, and then the winding reel housing 135 can be directly removed from the nesting portion 1321. In the embodiment, when mounting the winding reel housing 135, attention should be paid to the coupling between the second winding groove 1353 on the winding reel housing 135 and the first winding groove 1312 on the fixing portion 1311.

In some embodiments, the first winding groove 1312 can be aligned with the second winding groove 1353 through cooperation of the first limiting structure 1322 and the second limiting structure 1351. In some embodiments, the winding reel housing 135 may be first mounted on the nesting portion 1321, and then the first winding groove 1312 and the second winding groove 1353 may be respectively processed/defined on the fixing portion 1311 and the winding reel housing 135, so that the coupling between the first winding groove 1312 and the second winding groove 1353 will be more accurate, which may facilitate the winding of the cable 900.

Referring to FIG. 8 and FIG. 9, the winding reel 130 according to an embodiment of the present disclosure includes a reel body 136 and a cable-pressing member 137. The reel body 136 is configured to wind the cable, and a fixing position 1361 is arranged on a side surface of the reel body 136. The cable-pressing member 137 is mounted at the fixing position 1361, and the cable-pressing member 137 and the fixing position 1361 are configured to press and fix the cable 900.

In some embodiments, the reel body 136 may be the inner core 131.

In the winding reel 130 according to an embodiment of the present disclosure, the cable 900 is pressed and fixed by the cable-pressing member 137 and the fixing position 1361 on the reel body 136, which may stably fix the cable 900 on the winding reel 130, which may help reduce the loosening of the cable 900. In addition, it may enable the end of the cable 900 to be hidden and fixed in the fixing position 1361, which may reduce the possibility of a fixing part of the cable 900 interfering with rotation of the winding reel 130.

Specifically, the reel body 136 may be in a cylindrical structure to facilitate the rotation of the winding reel 130, which may enable the cable 900 to be better wound on the outer peripheral wall of the winding reel 130. The reel body 136 may be injection-molded from the material such as the plastic or the hard rubber, etc., which not only has the relatively simple manufacturing process and is easy to manufacture, but also has the good structural strength and is not easily damaged. The present disclosure does not limit the material and forming method of the reel body 136.

The fixing position 1361 may be provided on the outer peripheral wall of the reel body 136, and the cable-pressing member 137 is mounted in cooperation with the fixing position 1361 to press an end of the cable 900. In this way, the end of the cable 900 is more firmly fixed under the pressing of the cable-pressing member 137 and the fixing position 1361, thereby preventing the cable 900 from loosening during the winding process of the winding reel 130. At the same time, a cooperation mode between the cable-pressing member 137 and the fixing position 1361 also enables the fixing of the cable 900 to be more convenient and efficient.

Further, the fixing position 1361 may be configured in a groove shape, and is recessed from the outer peripheral wall of the reel body 136 toward an axis of the reel body 136. The shape of the cable-pressing member 137 may match a recessed shape of the fixing position 1361, that is, the cable-pressing member 137 may be tightly buckled/pressed in the fixing position 1361, which can reduce an effect on the rotation of the reel body 136 and the winding of the cable 900 on the reel body 136.

When mounting the cable 900, the end of the cable 900 may be placed in the fixing position 1361, and then the cable-pressing member 137 is buckled at the fixing position 1361, so that the cable 900 can be firmly pressed between the cable-pressing member 137 and the fixing position 1361, which may ensure more stable fixing of the cable 900. At the same time, the fixing end of the cable 900 can be also hidden between the cable-pressing member 137 and the fixing position 1361, which may help reduce the possibility of the fixing end of the cable 900 knotting with the cable 900 during a subsequent winding process and may help reduce an effect on the rotation of the winding reel 130.

Referring to FIGS. 9-11, in some embodiments, the fixing position 1361 is located at an end portion of a peripheral wall of the reel body 136. The cable-pressing member 137 is aligned with the fixing position 1361.

Thus, the cable 900 can be arranged from one end of the winding reel 130 to the other end of the winding reel 130 during winding the cable 900, so that the cable 900 is arranged more evenly on the winding reel 130, which may help reduce cable entanglement/tangling when winding or releasing the cable 900.

Specifically, the fixing position 1361 may be arranged at an end portion of the outer peripheral wall of the reel body 136, and thus the end of the cable 900 will be fixed at a side of an end portion of the reel body 136. When winding the cable 900, the cable 900 can be wound from the one end of the fixing position 1361 of the reel body 136 to the other end of the fixing position 1361, and the cable 900 can be evenly and tightly arranged/wound on the winding reel 130.

In an embodiment of the present disclosure, a length of the cable 900 may be set to a length of one layer arranged from one end of the reel body 136 to the other end of the reel body 136, so that the cable 900 is not easy to be knotted or entangled/tangled when arranged. Of course, when the cable 900 is relatively long, the cable 900 may also be arranged from one end of the reel body 136 to the other end of the reel body 136 in one layer, and then wound in a second layer returning from the other end to the one end. Since the cable 900 is wound relatively tightly in a first layer, it may be possible to reduce entanglement or knotting between the second layer and the first layer when the second layer is wound.

In other embodiments, the fixing position 1361 may be located at any position on the outer peripheral wall of the reel body 136, and the present disclosure does not limit a position where the fixing position 1361 on the reel body 136 is disposed.

Referring to FIGS. 9-11, in some embodiments, a second cable groove 1373 is defined at the fixing position 1361 and/or the cable-pressing member 137. The second cable groove 1373 is configured to accommodate the cable 900. The cable-pressing member 137 and/or the fixing position 1361 may be configured to press the cable 900 in the second cable groove 1373.

Thus, the end of the cable 900 can be placed in the second cable groove 1373 and then pressed by the cable-pressing member 137, making installation of the cable 900 more convenient and preventing the end of the cable 900 from shifting randomly during pressing.

Specifically, the second cable groove 1373 may be defined at the fixing position 1361, or may be defined on the cable-pressing member 137, or may be provided on both the fixing position 1361 and the cable-pressing member 137. A depth of the second cable groove 1373 may be set according to a diameter of the cable 900. When each of the fixing position 1361 and the cable-pressing member 137 defines the second cable groove 1373, a height of a cross-section enclosed by two second cable grooves 1373 may be set according to the diameter of the cable 900. When fixing the cable 900, the end of the cable 900 can be first placed in the second cable groove 1373, and then the cable-pressing member 137 is mounted at the fixing position 1361, so that the end of the cable 900 can be accurately pressed between the cable-pressing member 137 and the fixing position 1361 under the limitation of the second cable groove 1373, which may help reduce the possibility of the end of the cable 900 shifting randomly and not being pressed during pressing.

In some embodiments, the second cable groove 1373 is curved. Thus, the resistance to pulling the cable 900 in a cable groove is improved, and the curved second cable groove 1373 can provide a greater fixing force to the cable 900 at a curved position. After the cable-pressing member 137 presses the cable 900, the cable 900 can be more stable and more firmly fixed in the second cable groove 1373. For example, the second cable groove 1373 may be in an arc shape, a ring shape, a S shape, etc. The present disclosure does not limit this.

Referring to FIGS. 9-11, in some embodiments, the fixing position 1361 includes a second mounting position 1362, and when the cable-pressing member 137 is mounted on the reel body 136, the second cable groove 1373 is defined around a peripheral side of the second mounting position 1362.

Thus, the cable-pressing member 137 can be mounted in cooperation with the second mounting position 1362 at the fixing position 1361. The second cable groove 1373 is defined around the peripheral side of the second mounting position 1362, such that it can not only be curved to enhance fixing the stability of the cable 900, but also reduce an opening area of the fixing position 1361 on the reel body 136, making installation more convenient. In addition, when the second cable groove 1373 is defined around the peripheral side of the second mounting position 1362, and the cable-pressing member 137 is fixed through the second mounting position 1362, pressure provided by the second mounting position 1362 can better act on the second cable groove 1373, so as to press the cable through the second cable groove 1373.

Specifically, the second mounting position 1362 may be located in a middle position inside a groove of the fixing position 1361, and correspondingly, a middle part of the cable-pressing member 137 may have a structure matching with the second mounting position 1362, so that the cable-pressing member 137 can be mounted and fixed with the second mounting position 1362. The second cable groove 1373 can be arranged around the second mounting position 1362, which not only increases a length of the end of the cable 900 in the second cable groove 1373, but also can increase the friction force of the cable 900 in the second cable groove 1373 by curving and placing the cable 900 in the second cable groove 1373. Furthermore, the second mounting position 1362 can provide better pressing force for the second cable groove 1373, so that the cable 900 can be mounted more firmly and stably.

Referring to FIGS. 9-11, in some embodiments, a second mounting position 1362 is provided on the fixing position 1361. A screw hole 1363 is defined on the second mounting position 1362. A first through hole 1371 corresponding to the screw hole 1363 is defined on the cable-pressing member 137. The cable-pressing member 137 is fixed at the fixing position 1361 by passing a screw through the first through hole 1371 and screwing the screw into the screw hole 1363.

Thus, the cable-pressing member 137 can press the cable 900 by cooperating with the screw hole 1363 on the mounting position, which has a strong fixing effect. Therefore, it is convenient for installation and disassembly, which facilitates replacement of the cable 900.

Specifically, the second mounting position 1362 may be formed in a middle position inside a groove of the fixing position 1361 and may be in a boss-like structure. At least one screw hole 1363 is defined on the second mounting position 1362, and the number and the position of the screw hole 1363 may be selected according to size of the second mounting position 1362. The present disclosure does not limit a shape of the second mounting position 1362 and the number and the position of the screw hole 1363 defined on the second mounting position 1362.

Correspondingly, the first through hole 1371 may be defined on the cable-pressing member 137, and a position and the number of the first through hole 1371 may be corresponding to the position and the number of the screw hole 1363. A screw passes through the first through hole 1371 and is screwed into the screw hole 1363 to fix the cable-pressing member 137 at the fixing position 1361, thereby pressing the cable 900 between the cable-pressing member 137 and the fixing position 1361, which has a good fixing effect on the cable 900, and is convenient for installation and disassembly of the cable-pressing member 137.

Referring to FIGS. 9-11, in some embodiments, a plurality of cable-pressing protrusions 1373a are provided on the fixing position 1361 and/or the cable-pressing member 137. The plurality of cable-pressing protrusions 1373a are arranged at intervals along an extending direction of the second cable groove 1373.

Thus, when the cable-pressing member 137 is mounted at the fixing position 1361, the plurality of cable-pressing protrusions 1373a can further press the cable 900, which may improve the stability of the cable 900 in the second cable groove 1373, enhancing fixing strength of the cable 900, and preventing the cable 900 from loosening.

Specifically, the plurality of cable-pressing protrusions 1373a may be provided on the fixing position 1361, or arranged on the cable-pressing member 137, or arranged on both the fixing position 1361 and the cable-pressing member 137. When the plurality of cable-pressing protrusions 1373a are arranged at the fixing position 1361, if the second cable groove 1373 is defined at the fixing position 1361, the plurality of cable-pressing protrusions 1373a may be formed in the second cable groove 1373 at the fixing position 1361. If no second cable groove 1373 is defined at the fixing position 1361, the plurality of cable-pressing protrusions 1373a may be arranged at a position corresponding to the second cable groove 1373 on the cable-pressing member 137, and the plurality of cable-pressing protrusions 1373a are arranged at intervals along the extending direction of the second cable groove 1373. When the plurality of cable-pressing protrusions 1373a are provided on the cable-pressing member 137, if the second cable groove 1373 is provided on the cable-pressing member 137, the plurality of cable-pressing protrusions 1373a may be provided in the second cable groove 1373; if no second cable groove 1373 is provided on the cable-pressing member 137, the plurality of cable-pressing protrusions 1373a may be formed at a position corresponding to the second cable groove 1373 on the cable-pressing member 137, and the plurality of cable-pressing protrusions 1373a are also arranged at intervals along the extending direction of the second cable groove 1373. Thus, when the cable-pressing member 137 is pressed tightly, the plurality of cable-pressing protrusions 1373a can better clamp the cable 900, which may help reduce the possibility of the cable 900 slipping off.

In some embodiments, when the plurality of cable-pressing protrusions 1373a are provided on both the fixing position 1361 and the cable-pressing member 137, the plurality of cable-pressing protrusions 1373a on the fixing position 1361 and the plurality of cable-pressing protrusions 1373a on the cable-pressing member 137 are arranged in a staggered manner, which may help reduce the possibility of the cable 900 being damaged due to excessive snapping by the plurality of cable-pressing protrusions 1373a. Therefore, it may help reduce interference with installation of the cable-pressing member 137 at the fixing position 1361 caused by alignment of the cable-pressing protrusion 1373a on the cable-pressing member 137 and the cable-pressing protrusion 1373a on the fixing position 1361. At the same time, a staggered arrangement of the plurality of cable-pressing protrusions 1373a above and below the cable 900 increases snapping/engaging points for the cable 900, which may further improve fixing effect of the cable 900.

Referring to FIGS. 9-11, in some embodiments, a corresponding one of the plurality of cable-pressing protrusions 1373a is a sheet-like structure, and a protruding direction of the corresponding one of the plurality of cable-pressing protrusions 1373a is substantially perpendicular to the extending direction of the second cable groove 1373. Thus, a contact point between the sheet-like cable-pressing protrusion 1373a and the cable 900 is smaller, which can generate greater pressure on the cable 900, which may improve the snapping effect of the corresponding one of the plurality of cable-pressing protrusions 1373a on the cable 900. A vertical arrangement can better press the cable 900 in the second cable groove 1373.

In some embodiments, an arc-shaped notch 1373b is defined at a contact end of the corresponding one of the plurality of cable-pressing protrusions 1373a that contacts the cable 900. Thus, when the corresponding one of the plurality of cable-pressing protrusions 1373a is pressed and contacted with the cable 900, the arc-shaped notch 1373b can reduce the possibility of the cable 900 being damaged after the cable 900 is pressed, and may be configured to protect the cable 900 when fixing and pressing the cable 900.

In some embodiments, a shape of the arc-shaped notch 1373b may match a thickness/diameter of the cable 900. The arc-shaped notch 1373b of the corresponding one of the plurality of cable-pressing protrusions 1373a on the fixing position 1361 may be defined at an end portion facing the cable-pressing member 137. The arc-shaped notch 1373b of the corresponding one of the plurality of cable-pressing protrusions 1373a on the cable-pressing member 137 may be defined at an end portion facing the fixing position 1361.

In some embodiments, the arc-shaped notch 1373b may be only defined on the corresponding one of the plurality of cable-pressing protrusions 1373a on the fixing position 1361, or only defined on the corresponding one of the plurality of cable-pressing protrusions 1373a on the cable-pressing member 137, so that the corresponding one of the plurality of cable-pressing protrusions 1373a has a better snapping effect on the cable 900. Of course, the arc-shaped notches 1373b may also be defined on the corresponding one of the plurality of cable-pressing protrusions 1373a on the fixing position 1361 and defined on the corresponding one of the plurality of cable-pressing protrusions 1373a on the cable-pressing member 137, which is not limited in the present disclosure.

Referring to FIGS. 9-11, in some embodiments, a first positioning protrusion 1372 is arranged on one of the fixing position 1361 and the cable-pressing member 137, and a first positioning groove 1364 is defined on the other of the fixing position 1361 and the cable-pressing member 137. The first positioning protrusion 1372 and the first positioning groove 1364 correspond to each other.

Thus, when mounting the cable-pressing member 137, the cable-pressing member 137 can be positioned via the first positioning protrusion 1372 and the first positioning groove 1364, which may enable accurate alignment of the cable-pressing member 137 and make installation more convenient and efficient.

Specifically, when the first positioning protrusion 1372 is provided on the fixing position 1361, the first positioning groove 1364 is defined on the cable-pressing member 137. When the first positioning groove 1364 is defined at the fixing position 1361, the first positioning protrusion 1372 is provided on the cable-pressing member 137. The number of the first positioning protrusions 1372 may be at least one, and the number and the position of the first positioning grooves 1364 correspond to those of the first positioning protrusions 1372.

When installing the cable-pressing member 137, the first positioning protrusion 1372 can be aligned with the first positioning groove 1364 first, and then a bolt is tightened to fix. Thus, the first through hole 1371 on the cable-pressing member 137 and the screw hole 1363 on the fixing position 1361 are also aligned one by one, which may facilitate the bolt to pass through and tighten to fix the cable-pressing member 137.

Referring to FIGS. 9-11, in some embodiments, the fixing position 1361 includes a first connecting surface 1365 and a first side surface 1366 located on a side of the first connecting surface 1365. The first connecting surface 1365 is configured to press the cable 900.

The cable-pressing member 137 includes a second connecting surface 1374 opposite to the first connecting surface 1365, and a second side surface 1375 opposite to the first side surface 1366. The first positioning protrusion 1372 and the first positioning groove 1364 are respectively located on the first side surface 1366 and the second side surface 1375.

Thus, the first positioning protrusion 1372 and the first positioning groove 1364 are respectively located on the side surfaces of the fixing position 1361 and the cable-pressing member 137, such that it can not only play a positioning role in installation and fixing of the cable-pressing member 137, but also play an auxiliary role in pressing the cable to a certain extent.

Specifically, the first connecting surface 1365 may be a surface on the fixing position 1361 that corresponds to the cable-pressing member 137 and configured to press the cable 900. The second cable groove 1373 and the second mounting position 1362 may be located on the first connecting surface 1365. The first side surface 1366 may be connected to the first connecting surface 1365 and form a certain angle with the first connecting surface 1365. The second connecting surface 1374 may be a surface on the cable-pressing member 137 that cooperates with the first connecting surface 1365 to press the cable 900. The second cable groove 1373 may also be defined on the second connecting surface 1374. The second side surface 1375 is connected to the second connecting surface 1374 and is opposite to the first side surface 1366 when the cable-pressing member 137 is mounted.

The first positioning protrusion 1372 and the first positioning groove 1364 may be respectively arranged on the first side surface 1366 and the second side surface 1375. That is, the first positioning protrusion 1372 may be arranged on the first side surface 1366, and the first positioning groove 1364 may be defined on the second side surface 1375; or the first positioning protrusion 1372 may be arranged on the second side surface 1375, and the first positioning groove 1364 is defined on the first side surface 1366, which is not limited in the present disclosure.

When mounting the cable-pressing member 137, the first positioning protrusion 1372 and the first positioning groove 1364 can be aligned first, so that the second side surface 1375 of the cable-pressing member 137 is aligned with the first side surface 1366. Then, a position where the first positioning protrusion 1372 is engaged with the first positioning groove 1364 is configured as a fulcrum and a positioning point, and a bolt is tightened to press the cable-pressing member 137, which may help support installation accuracy of the cable-pressing member 137 and provide a better fixing effect for the cable 900.

Referring to FIGS. 9-11, in some embodiments, the cable-pressing member 137 includes a winding surface 1376. The winding surface 1376 is an arcuate surface and is tangent to an outer peripheral surface of the reel body 136.

Thus, when the cable-pressing member 137 is mounted at the fixing position 1361, the winding surface 1376 of the cable-pressing member 137 can be aligned with the outer peripheral surface of the reel body 136, so that the cable-pressing member 137 can press the cable 900 without affecting the winding of the cable 900 on the reel body 136.

Specifically, the winding surface 1376 is a surface of the cable-pressing member 137 opposite to the first connecting surface 1365. When the cable-pressing member 137 is mounted at the fixing position 1361, an edge of the winding surface 1376 is connected to an edge of the reel body 136 and is tangent to the peripheral surface of the reel body 136. That is, after the cable-pressing member 137 is mounted at the fixing position 1361 to press the cable 900, the winding surface 1376 will not protrude or be recessed relative to the outer peripheral surface of the reel body 136. Therefore, when the cable 900 is wound on the reel body 136, the cable-pressing member 137 will not affect the winding of the cable 900, so that the cable 900 can be wound more neatly.

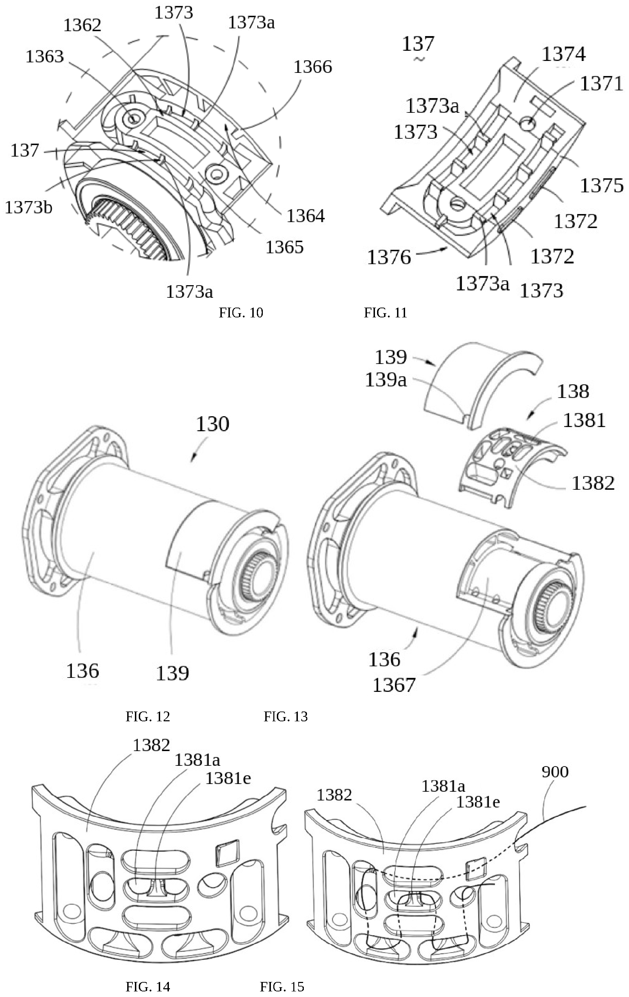

Referring to FIG. 12 and FIG. 13, in some embodiments, the winding reel 130 includes: a winding disc 138, including a plurality of winding positions 1381 or a plurality of positions of winding the cable 900, where the plurality of winding positions 1381 are configured to wind an end of the cable 900, so that the end of the cable 900 is fixed to the winding disc 138; a reel body 136, where the winding disc 138 is mounted on the reel body 136, and the reel body 136 is configured to wind a remaining portion of the cable 900.

A winding apparatus in embodiments of the present disclosure includes the winding disc 138 and the reel body 136. In some embodiments, the winding disc 138 may be the cable-pressing member 137.

The winding disc 138 includes the plurality of winding positions 1381 configured to wind an end of the cable 900, so that the end of the cable 900 can be fixed to the winding disc 138, and then the remaining portion of the cable 900 is wound on the reel body 136. Specifically, during winding, the cable 900 can be regularly arranged around an axial direction of the reel body 136, so that the reel body 136 can rotate smoothly when the cable 900 is pulled out or retracted. Thus, by arranging the winding positions 1381, it may enable the end of the cable 900 to be fully wound and fixed on the winding disc 138, which may strengthen the connection between the cable 900 and the winding disc 138, thereby improving the stability of the connection between the cable 900 and the winding disc 138, and enhancing the safety performance of the winding apparatus.

It should be noted that the winding positions 1381 in embodiments of the present disclosure can enable the cable 900 to turn multiple times when the cable 900 passes through the plurality of winding positions 1381, and a turning angle is no less than 90 degrees, so that the cable 900 can generate a large interaction force with the winding disc 138 at the winding positions 1381. As a result, the cable 900 can be tortuously wound on the winding disc 138, is not easy to fall off, and has higher stability.

Referring to FIGS. 14-17, in some embodiments, the winding disc 138 includes a third side surface 1382 and a fourth side surface 1383 opposite to each other. The plurality of winding positions 1381 includes a plurality of threading holes 1381a arranged at intervals. The threading holes 1381a are in communication with the third side surface 1382 and the fourth side surface 1383. The threading hole 1381a is configured for the cable 900 to pass through. After the cable 900 passes through the threading holes 1381a, the cable 900 can be wound on the winding disc 138. Specifically, the cable 900 after passing through the threading holes 1381a will be partially located on the third side surface 1382 and partially located on the fourth side surface 1383, and even the cable 900 can form a staggered arrangement on the third side surface 1382 and/or the fourth side surface 1383, thereby strengthening connection and fixation between the cable 900 and the winding disc 138.

Referring to FIG. 14 and FIG. 15, in some embodiments, the winding position 1381 includes a plurality of cable channels 1381e defined on the third side surface 1382 of the winding disc 138. Both ends of a corresponding one of the plurality of cable channels 1381e are in communication with corresponding two of the threading holes 1381a on the third side surface 1382. Thus, the plurality of cable channels 1381e can be configured to accommodate the cable 900, so as to reduce protrusion of the cable 900 on the third side surface 1382 of the winding disc 138 after the cable 900 is wound on the winding disc 138.

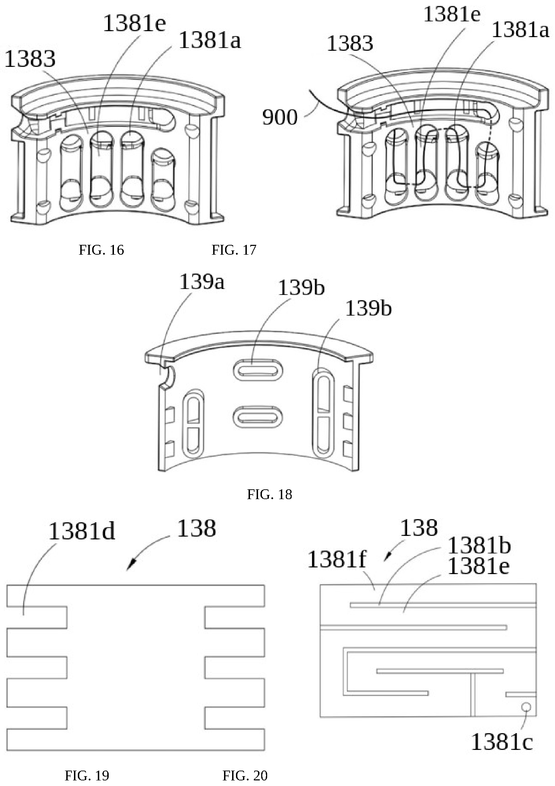

Referring to FIG. 16 and FIG. 17, in some embodiments, the winding position 1381 further includes the plurality of cable channels 1381e defined on the fourth side surface 1383 of the winding disc 138. Both ends of a corresponding one of the plurality of cable channels 1381e are in communication with corresponding two of the plurality of threading holes 1381a on the fourth side surface 1383. Thus, the plurality of cable channels 1381e can also be configured to accommodate the cable 900, so as to reduce protrusion of the cable 900 on the fourth side surface 1383 of the winding disc 138 after the cable 900 is wound on the winding disc 138.

Referring to FIGS. 15-17, in some embodiments, a portion of the plurality of cable channels 1381e may extend longitudinally, and another portion of the plurality of cable channels 1381e may extend transversely, thereby achieving the turning angle of the cable 900 equal to 90 degrees, so that the cable 900 can be firmly wound on the winding disc 138, and the cable 900 can also be wound more regularly/orderly, which may facilitate later disassembly or replacement of the cable 900. Referring to FIGS. 15 to 17, in some embodiments, the corresponding one of the plurality of cable channels 1381e may be a groove defined on the third side surface 1382 and/or the fourth side surface 1383. Of course, in other embodiments, the cable channel 1381e may also be a channel enclosed by a convex plate 1381b.

In some embodiments, the winding disc 138 is arc-shaped, the reel body 136 includes a first mounting position 1367, and the winding disc 138 is mounted at the first mounting position 1367; and/or the output device further includes a protective cover 139, the protective cover 139 is covered on the winding disc 138, and a cable outlet 139a is further defined on the protective cover 139 and is configured for the cable 900 to pass through; an outer side of the winding disc 138 or an outer side of the protective cover 139 is tangent to the outer peripheral surface of the reel body 136. For example, referring to FIG. 12, the first mounting position 1367 is a recessed structure on a surface of the reel body 136. The winding disc 138 is mounted on the first mounting position 1367, which can reduce the possibility of the winding disc 138 protruding from the outer peripheral surface of the reel body 136. An arc-shaped structure of the winding disc 138 can enable/make the outer side of the winding disc 138 tangent to the outer peripheral surface of the reel body 136, so that the winding disc 138 mounted on the first mounting position 1367 will not affect the winding of the cable 900 on the reel body 136. In some embodiments, a winding apparatus further includes the protective cover 139. The protective cover 139 can be configured to protect the winding disc 138 and the cable 900 wound on the winding disc 138. After the cable 900 is wound and fixed on the winding disc 138, the cable 900 passes through the cable outlet 139a of the protective cover 139 and then is wound on the outer wall of the reel body 136. In addition, the outer side of the protective cover 139 can also be tangent to the outer peripheral surface of the reel body 136, so that the protective cover 139 will not affect the winding of the cable 900 on the reel body 136.

In some embodiments, a second positioning protrusion is provided on a side of the protective cover 139 facing the winding disc 138/the first mounting position 1367. A second positioning groove is defined on the winding disc 138. The second positioning protrusion and the second positioning groove correspond to each other, which can provide positioning for installation of the protective cover 139. At the same time, the second positioning groove can also be defined at the first mounting position 1367, or can also be defined on both the first mounting position 1367 and the winding disc 138.

Referring to FIG. 18, in some embodiments, a first protruding portion 139b is arranged at a side of the protective cover 139 facing the winding disc 138. The first protruding portion 139b is configured to press the cable 900. In some embodiments, a position at which the first protruding portion 139b is disposed is matched with a position of winding the cable 900. Thus, when the protective cover 139 is closed, the first protruding portion 139b can further press the cable 900 in the cable channel 1381e, so as to further prevent the cable 900 from loosening and falling off.

In some examples, after the cable 900 is wound and fixed on the winding disc 138, the winding disc 138 can be fixed to the reel body 136 by a screw. After the protective cover 139 is covered on the winding disc 138, the winding disc 138 can also be fixed to the reel body 136 by a screw or a snap.

In some embodiments, a second protruding portion is provided on a side of the first mounting position 1367 facing the winding disc 138. The second protruding portion is configured to press the cable 900. In some embodiments, a position at which the second protruding portion is disposed is matched with the position of winding the cable 900. Thus, when the winding disc 138 is fixed in the first mounting position 1367, the second protruding portion will press the cable 900 in the cable channel 1381e.

In addition, in some embodiments, when the protective cover 139 also covers the winding disc 138, the winding disc 138 can be fully fixed in the first mounting position 1367, and a first side and a second side of the winding disc 138 can be respectively pressed against by the protective cover 139 and the reel body 136. At the same time, the cable 900 in the cable channel 1381e is respectively pressed by the first protruding portion 139b and/or the second protruding portion.

Specifically, referring to FIG. 15 and FIG. 17, when in use, the user passes an end of the cable 900 through the plurality of threading holes 1381a in sequence, and the cable 900 is correspondingly accommodated in the plurality of cable channels 1381e. Then, the winding disc 138 with the cable 900 wound thereon is mounted at the first mounting position 1367 by a screw or a snap-fit, and the second protruding portion on the first mounting position 1367 presses and fixes the cable 900 in the cable channel 1381e on the fourth side surface 1383. Then, the protective cover 139 is covered on the winding disc 138, and the remaining portion of the cable 900 passes through the cable outlet 139a of the protective cover 139, and then the protective cover 139 is mounted on the reel body 136 by the screw or the snap-fit. At this time, the first protruding portion 139b on the protective cover 139 presses and fixes the cable 900 in the cable channel 1381e on the third side surface 1382, and finally, the remaining portion of the cable 900 is wound on the outer wall of the reel body 136.

Referring to FIG. 19, in some embodiments, the winding position 1381 includes a plurality of notches 1381d defined on opposite sides of the winding disc 138, which may allow the end portion of the cable 900 to be wound in sequence. It can be understood that, in an embodiment, the winding disc 138 can be in a fishbone-like structure. When winding the cable 900, the user passes the cable 900 through a corresponding one of the notches 1381d at one end of the winding disc 138, and then passes the cable 900 through another corresponding one of the notches 1381d at the opposite end of the winding disc 138. Thus, the cable 900 is repeatedly passed through the notches 1381d at the opposite ends, so that the cable 900 can be wound on the winding disc 138. In some embodiments, the cable 900 is wound on the winding disc 138 multiple times, and some of the cable 900 can be staggered and overlapped, so that the cable 900 wound on an outer ring may also squeeze/press the cable 900 wound on an inner ring, thereby further making the cable 900 wound on the winding disc 138 more stable and firm.

In some embodiments, the corresponding one of the plurality of cable channels 1381e can also be defined between two adjacent of the plurality of notches 1381d. For example, a groove is defined, so that the winding of the cable 900 does not protrude from a surface of the winding disc 138.

Referring to FIG. 20, in some embodiments, the winding disc 138 includes the third side surface 1382 and the fourth side surface 1383 opposite to each other. At least one of the cable channels 1381e is defined on the third side surface 1382 and/or the fourth side surface 1383 of the winding disc 138, and is configured to accommodate the cable 900. Referring to FIG. 20, in some embodiments, the winding disc 138 further includes a base plate 1381f and a plurality of convex plates 1381b. The plurality of convex plates 1381b are provided on the base plate 1381f and protrude toward the third side surface 1382 or the fourth side surface 1383. The cable channel 1381e is defined between two adjacent of the plurality of convex plates 1381b. The cable 900 can be staggeredly wound and fixed on the plurality of convex plates 1381b through the cable channel 1381e. In other embodiments, a through slot or through groove may also be defined on the third side surface 1382 and/or the fourth side surface 1383 of the winding disc 138, and the cable channel 1381e is defined by the through slot.

In some embodiments, the cable channel 1381e extends in a zigzag pattern, so that the cable 900 can form a bent or curved path when passing through the cable channel 1381e. Therefore, the cable 900 can be wound on the winding disc 138 in a more curved or staggered manner, resulting in a firmer winding.

In some embodiments, at least one of the cable channels 1381e is respectively defined on the third side surface 1382 and the fourth side surface 1383 of the winding disc 138. At least one fifth through via 1381c is also defined on the winding disc 138 or at least one of the notches 1381d is also defined at a side, and the at least one fifth through via 1381c or the at least one of the notches 1381d is in communication with the cable channels 1381e on the third side surface 1382 and the fourth side surface 1383. Thus, after the cable 900 is wound on the winding disc 138 on the third side surface 1382, the cable 900 can pass through the fifth through via 1381c to the fourth side surface 1383, so that the cable 900 can continue to be wound on the fourth side surface 1383. In some embodiments, the winding disc 138 may not define the fifth through via 1381c, and at least one of the notches 1381d is defined at the side. When the cable 900 is wound on the third side surface 1382, the cable 900 may be wound from the at least one of the notches 1381d of the winding disc 138 to the fourth side surface 1383.

Some embodiments of the present disclosure further provide a fitness device, including the winding reel 130 according to any one of the foregoing embodiments. In some examples, the fitness device may be a rowing exercise machine, or the output device according to any one of the foregoing embodiments. During use, a user repeatedly pulls the cable 900 to achieve a fitness purpose, and the fitness device including the winding device 100 can reduce the possibility of the cable 900 easily coming off, which may provide better stability and higher safety.

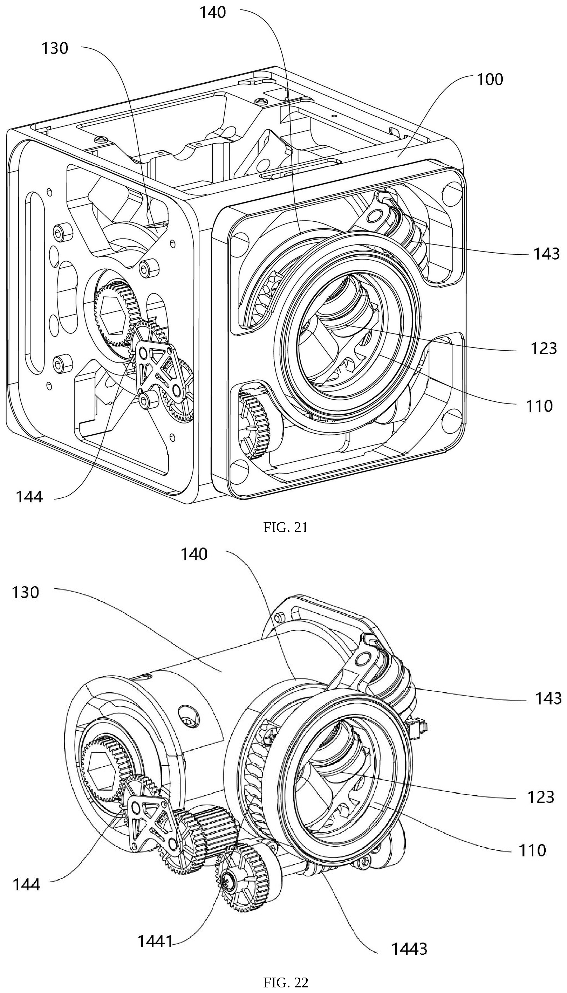

Referring to FIGS. 21-30, in an embodiment of the present disclosure, a cable arranging and winding mechanism is disclosed, which is arranged in the cable housing 100. The cable arranging and winding mechanism includes a winding reel 130, a cable-arranging assembly 140 and a linkage assembly or a drive assembly 144. The winding reel 130 is rotatably disposed on the cable housing 100, and the cable-arranging assembly 140 is movably disposed on the cable housing 100. The linkage assembly 144 is connected to the winding reel 130 and the cable-arranging assembly 140, and enables the winding reel 130 and the cable-arranging assembly 140 to be linked. When in use, the cable 900 is wound on the winding reel 130, an end of the cable 900 is fixed on the winding reel 130, and the other end of the cable 900 passes through the cable-arranging assembly 140 and exits from the cable housing 100 through a cable outlet 110.

During operation, taking releasing the cable 900 as an example, the cable 900 is pulled, and at the same time, the winding reel 130 rotates to release the cable. The winding reel 130 rotates to drive the cable-arranging assembly 140 to move via the linkage assembly 144, and the cable-arranging assembly 140 moves synchronously with a position where the cable 900 is released from the winding reel 130, i.e., with a position of releasing the cable 900 from the winding reel 130. For example, if the cable 900 on the winding reel 130 is wound from left to right, the position where the cable 900 is released from the winding reel 130 is from the right to the left (i.e., a direction of releasing the cable 900 from the winding reel 130 is from the right to the left), and the cable-arranging assembly 140 moves synchronously from the right to the left, that is, a movement direction of the cable-arranging assembly 140 is consistent with the direction of releasing the cable 900 from the winding reel 130, so that the cable 900 on the winding reel 130 can be guided by the cable-arranging assembly 140, thereby achieving orderly releasing the cable 900. The cable 900 after releasing exits from the cable housing 100 through the cable outlet 110, which may maintain stable releasing the cable 900 at a fixed position. Taking winding/retracting the cable 900 as an example, the winding reel 130 rotates to drive the cable 900 to wind/retract, and at the same time, the winding reel 130 drives the cable-arranging assembly 140 to move via the linkage assembly 144. At this time, the cable-arranging assembly 140 moves synchronously with a position where the cable 900 is wound/retracted on the winding reel 130, i.e., with a position of winding or arranging the cable 900 on the winding reel 130. For example, if the cable 900 on the winding reel 130 is wound from left to right, the position where the cable 900 is wound or arranged on the winding reel 130 is from the left to the right (i.e., a direction of winding or arranging the cable 900 on the winding reel 130 is from the left to the right), and the cable-arranging assembly 140 moves synchronously from the left to the right, that is, the movement direction of the cable-arranging assembly 140 is consistent with the cable-arranging direction of winding the cable 900 on the winding reel 130, so that the cable 900 retracted through the cable outlet 110 can be guided by the cable-arranging assembly 140, thereby achieving orderly cable winding. The cable 900 after cable winding is stably wound on the winding reel 130, and the cable 900 that has not been wound is retracted in sequence at a fixed position, i.e., at the cable outlet 110.

By configuring the linkage assembly 144 and the cable-arranging assembly 140, ordered winding and releasing of the cable 900 on the winding reel 130 can be automatically achieved by utilizing the rotation of the winding reel 130 when the winding reel 130 releases the cable 900. At the same time, the cable outlet 110 located at a fixed position of the cable housing 100, can prevent the cable 900 leaving the winding reel 130 from being affected by the cable-arranging assembly 140.

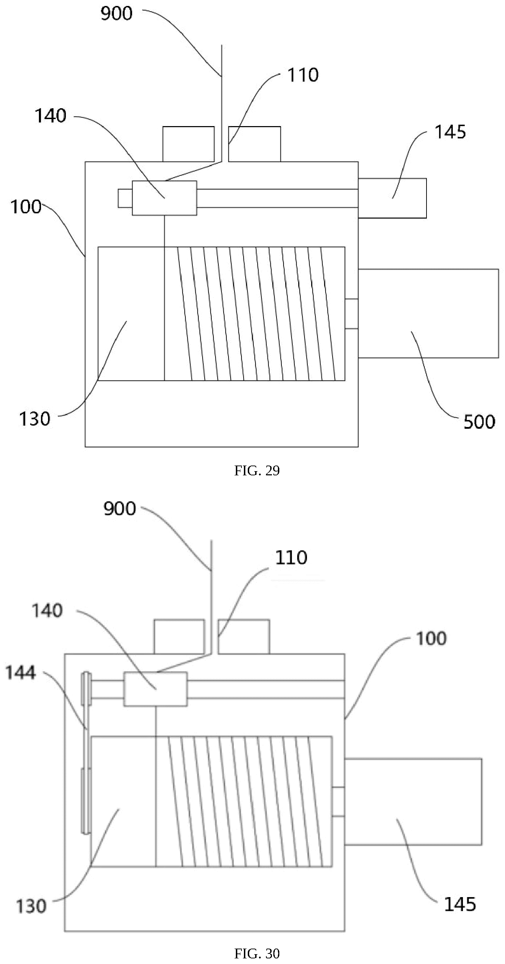

In some embodiments, as shown in FIG. 30, some embodiments of the present disclosure also disclose a cable arranging and winding mechanism, and the cable arranging and winding mechanism includes the cable housing 100, the winding reel 130, the cable-arranging assembly 140 and a power actuator 145. The winding reel 130 is rotatably arranged on the cable housing 100, the cable-arranging assembly 140 is movably arranged on the cable housing 100, and the power actuator 145 is configured to drive the cable-arranging assembly 140 to move. When in use, the cable 900 is wound on the winding reel 130, an end of the cable 900 is fixed on the winding reel 130, and the other end of the cable 900 passes through the cable-arranging assembly 140 and passes through the cable housing 100 via the cable outlet 110.

During operation, when the winding reel 130 releases or winds the cable 900, the power actuator 145 drives the cable-arranging assembly 140 to move in the same direction. For example, the cable 900 is wound from left to right. When the winding reel 130 releases the cable 900, the direction of releasing the cable 900 from the winding reel 130 is from right to left. At this time, the power actuator 145 drives the cable-arranging assembly 140 to move from right to left, so as to guide the cable 900 at the releasing position through the cable-arranging assembly 140, which may enable the cable 900 to smoothly pass through the cable outlet 110. For example, the cable 900 is wound from left to right of the winding reel 130. When the winding reel 130 winds the cable 900, the direction of winding the cable 900 on the winding reel 130 is from left to right. At this time, the power actuator 145 drives the cable-arranging assembly 140 to move from left to right, which may ensure that the cable 900 can not be repeatedly wound with each other, and reduce the possibility of the cable 900 being entangled and knotted on the winding reel 130.

By configuring the power actuator 145 and the cable-arranging assembly 140, the power actuator 145 can be configured to drive the cable-arranging assembly 140 to move when the winding reel 130 releases and winds the cable 900, so as to achieve ordered winding and releasing of the cable 900 on the winding reel 130. At the same time, the cable outlet 110 located at the fixed position of the cable housing 100 can prevent the cable leaving the winding reel 130 from being affected by the cable-arranging assembly 140, or enable the irregular cable 900 to be released/unwound orderly at the fixed position and then arranged neatly on the winding reel 130.

The concept of the cable housing 100 only refers to providing installation and positioning for the winding reel 130, the cable-arranging assembly 140, the linkage assembly 144, the power actuator 145 and the cable outlet 110. The cable housing 100 can be a single component or a combination of a plurality of components fixed to each other. The movement of the cable-arranging assembly 140 in some embodiments of the present disclosure can be translation or pivoting, which is not limited in the present disclosure. The linkage assembly 144 can be a gear transmission via a gear set, or a belt transmission or a chain transmission, or a worm 1443/worm gear transmission, or a crank-slider assembly, or a crank rocker assembly or other contact transmission modes, or a non-contact force transmission (for example, through magnetic transmission, etc.); and any transmission mode in the related art is included therein. The power actuator 145 can be a motor 500, or an electric push shaft, or other mechanical motion power sources such as hydraulic or pneumatic power sources, which can also include a transmission assembly for transmitting power from the power source to the cable-arranging assembly 140, and any power source or any integrated assembly of a power source and a transmission assembly in the related art that can transmit power to the cable-arranging assembly 140 for movement is included.

In some embodiments, as shown in FIGS. 21-25, the cable-arranging assembly 140 is pivotably arranged on the cable housing 100, and a pivot point of the cable-arranging assembly 140 is the cable outlet 110. Since the cable-arranging assembly 140 pivots about the cable outlet 110, a distance between a position where the cable 900 passes through the cable-arranging assembly 140 and the cable outlet 110 is constant, that is, the cable-arranging assembly 140 pivots to any position without affecting movement of this section of the cable 900, which may improve the stability of the cable-arranging assembly 140.

In some embodiments, the cable-arranging assembly 140 includes a pivoting seat 1411 and a cable-guiding arm 1412 connected to each other. The pivoting seat 1411 is rotatably disposed on the cable housing 100 around the cable outlet 110, and the cable-guiding arm 1412 is configured for the cable 900 to pass through. An angle detection assembly configured to detect a pivot angle of the cable-arranging assembly 140 is also provided. The pivot angle of the cable-arranging assembly 140 can be calculated via an angle detection apparatus 1413. Since a transmission ratio of the linkage assembly 144 and a diameter of the winding reel 130 are both constants, the number of revolutions of the winding reel 130 can be obtained by calculating the pivot angle, and then working status of releasing and winding can be obtained, such as working progress of releasing or winding, or a length of the cable 900 that has been wound or unwound, etc.

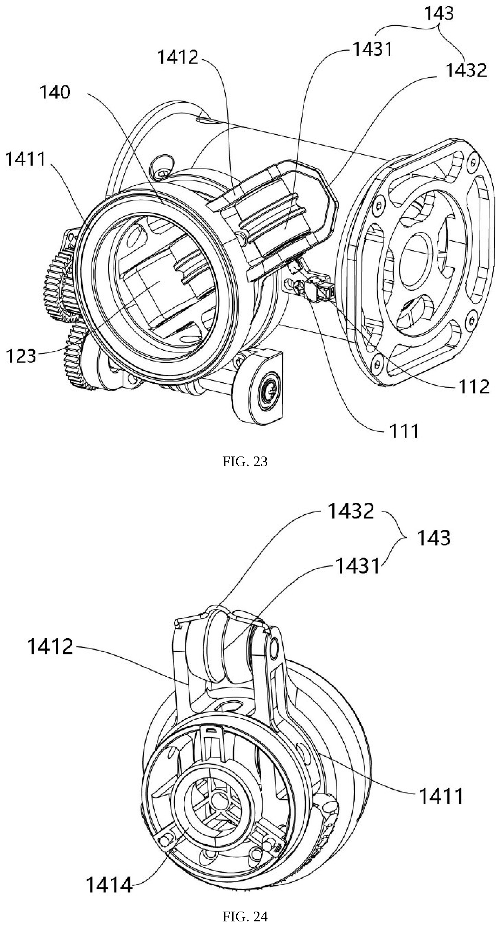

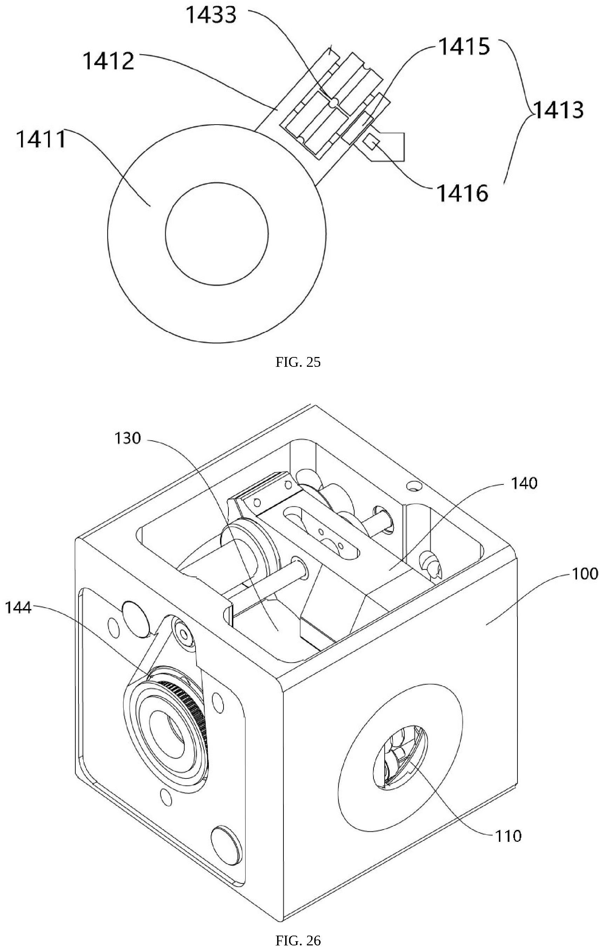

In some embodiments, as shown in FIG. 24, the angle detection apparatus 1413 may include a magnetic ring 1414 provided on the pivoting seat 1411, that is, when the pivoting seat 1411 rotates, a pivoting Hall sensor 1416 fixed on the cable housing 100 can detect change of magnetic field strength, and a pivot angle of the pivoting seat 1411 can be obtained according to magnitude of the magnetic field strength. As shown in FIG. 25, the angle detection apparatus 1413 can also include a magnetic member 1415 provided on the cable-guiding arm 1412 and a pivoting Hall sensor 1416 provided on the cable housing 100. When the cable-guiding arm 1412 rotates with the pivoting seat 1411, the pivoting Hall sensor 1416 fixed on the cable housing 100 can also sense the change of magnetic field strength, and the pivot angle of the pivoting seat 1411 and the cable-guiding arm 1412 can be obtained according to magnitude of the magnetic field strength.

In some embodiments, as shown in FIGS. 22-23, the linkage assembly 144 includes a self-locking worm wheel 1441 and a worm 1443. The winding reel 130 drives the self-locking worm wheel 1441 on the pivoting seat 1411 to rotate through the worm 1443. By utilizing the self-locking effect of the self-locking worm wheel 1441 and the worm 1443, one-way transmission of the worm 1443 to the worm wheel can be achieved, and self-locking of the worm wheel to the worm 1443 can be achieved at the same time, which can prevent the pivoting seat 1411 from rotating incorrectly due to gravity, impact or other reasons and thus driving the winding reel 130 to rotate for unwinding/releasing.

The self-locking worm wheel 1441 includes a complete full-circle worm wheel, or may also be an incomplete partial worm wheel, as long as the arrangement of worm wheel teeth of the worm wheel satisfies the pivoting stroke.

In some embodiments, as shown in FIGS. 26-28, the cable-arranging assembly 140 is slidably disposed on the cable housing 100, and a sliding direction is substantially parallel to an axial direction of the winding reel 130. When the winding reel 130 releases/unwinds or winds the cable 900, a movement of the position of releasing the cable 900 and a movement of the position of winding the cable 900 are substantially parallel to an axis of the winding reel 130. By configuring the cable-arranging assembly 140 in the same direction, the position of releasing the cable 900, the position of winding the cable 900, and the cable-arranging assembly 140 remain relatively stationary during releasing or winding, further improving stability.

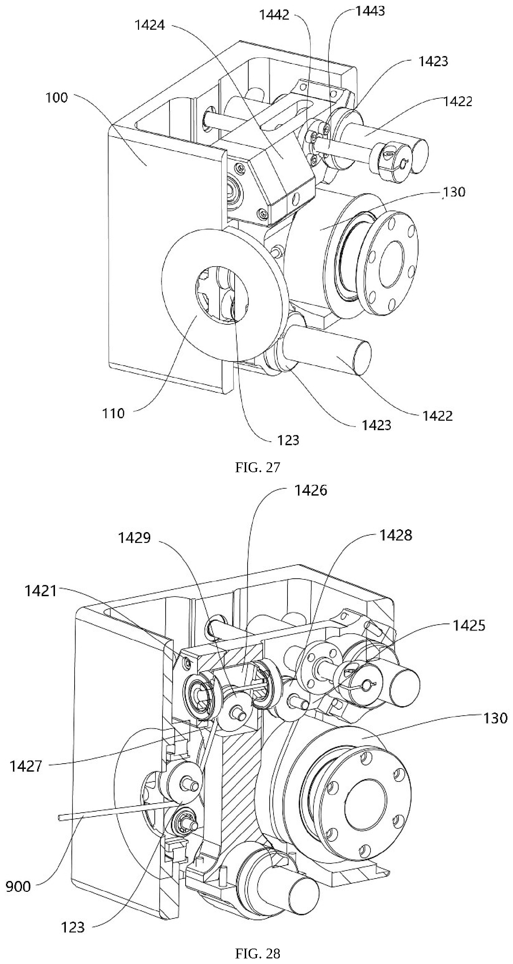

In some embodiments, as shown in FIG. 27, the cable-arranging assembly 140 includes a sliding base 1421 slidably disposed on the cable housing 100, and a cable-guiding assembly 1424 disposed on the sliding base 1421 and configured for the cable 900 to pass through. A guide shaft 1422 is disposed on the cable housing 100 along a direction parallel to an axial direction of the winding reel 130, and the sliding base 1421 is configured to be slidable on the guide shaft 1422 through a linear bearing 1423. The arrangement of the guide shaft 1422 and the linear bearing 1423 can reduce a sliding resistance of the sliding base 1421, which may improve the sliding precision of the sliding base 1421. At the same time, the guide shaft 1422 and the linear bearing 1423 can provide stable support for the sliding base 1421. In some embodiments, there are at least two guide shafts 1422 and at least two sliding bases 1421, and two sets of guide shafts 1422 can provide more stable support for the cable housing 100.

In some embodiments, the linkage assembly 144 includes a worm 1443 and a self-locking worm gear nut 1442. The worm 1443 is in transmission connection with the winding reel 130, and the worm gear nut is disposed on the sliding base 1421. Rotation of the winding reel 130 drives the worm 1443 to rotate, thereby driving the self-locking worm gear nut 1442 and the sliding base 1421 to translate or move along the worm 1443. The self-locking worm gear nut 1442 can also achieve one-way transmission from the worm 1443 to the self-locking worm gear nut 1442, and achieve self-locking of the self-locking worm gear nut 1442 to the worm 1443 at the same time, thereby preventing the sliding base 1421 from rotating incorrectly due to gravity, impact or other reasons and thus driving the winding reel 130 to rotate for releasing.

In some embodiments, as shown in FIG. 28, the cable-guiding assembly 1424 includes a cable-arranging port or cable winding port 1425 disposed on the sliding base 1421, and a rotating base 1426 located at a rear side of the cable-arranging port 1425 and rotatably disposed on the sliding base 1421 around a cable outgoing/outlet direction of the cable-arranging port 1425. The rotating base 1426 includes a threading channel and a direction-changing port 1427. The threading channel is defined on the rotating base 1426 along a rotating axis direction. The direction-changing port 1427 is disposed on the rotating base 1426 and in communication with the threading channel. The direction-changing port 1427 is tangent to a rotating axis of the rotating base 1426, and the cable 900 sequentially passes through the cable-arranging port 1425, the threading channel and the direction-changing port 1427, and finally exits from the cable outlet 110.

The cable-arranging port 1425 is disposed on the sliding base 1421 opposite to the winding reel 130, and the cable-arranging port 1425 includes a cable incoming direction entering from the winding reel 130 and a cable outgoing/outlet direction leaving the cable-arranging port 1425 and entering the threading channel of the rotating base 1426.

During operation, as the sliding base 1421 slides along the guide shaft 1422, positions of the cable-guiding assembly 1424 and the cable outlet 110 will inevitably change, resulting in changes in a relative distance and a relative angle between the cable-guiding assembly 1424 and the cable outlet 110. In an embodiment, by providing the rotating base 1426 and utilizing the tension on the cable 900, the rotating base 1426 can adaptively adjust an angle of the rotating base 1426 with the change in a relative position between the cable-guiding assembly and the cable outlet 110, so that the direction-changing port 1427 of the rotating base 1426 is in some cases aligned with the cable outlet 110, thereby preventing cable jumping phenomenon caused by excessive change in the relative position between the cable-guiding assembly 1424 and the cable outlet 110.

In some embodiments, a first direction-changing wheel 1428, such as a first direction-changing pulley, may further be disposed at the cable-arranging port 1425 in the cable-guiding assembly 1424, and the first direction-changing wheel 1428 is tangent to a rotating axis direction of the rotating base 1426. In some embodiments, a second direction-changing wheel 1429, such as a second direction-changing pulley, may further be disposed at the direction-changing port 1427 in the cable-guiding assembly 1424, and the second direction-changing wheel 1429 is tangent to the rotating axis direction of the rotating base 1426. That is, by providing the first direction-changing wheel 1428 and the second direction-changing wheel 1429, sliding of the cable 900 relative to the cable-guiding assembly 1424 is converted into rolling, thereby reducing frictional resistance and wear.

In some embodiments, as shown in FIG. 28, a cable outlet wheel 123, such as a cable outlet pulley, is disposed at the cable outlet 110, which can reduce the wear of the cable 900 passing through the cable outlet 110. In some embodiments, the cable outlet wheel 123 is a pair of wheels, and at least one of the cable outlet wheels 123 is provided with rotational damping. By providing the rotational damping, the cable 900 can have a certain tension when releasing or winding the cable 900, so that the cable 900 is tightened. The rotational damping for the cable outlet wheel 123 can be directly provided for rotation of the cable outlet wheel 123.

In some embodiments, the transmission ratio of the linkage assembly 144 can be reasonably set, so that when the winding reel 130 rotates one revolution, the linkage assembly 144 is configured to drive the threading port of the cable-arranging assembly 140 to translate or pivot a distance corresponding to a diameter of the cable 900, further improving precision of winding and releasing the cable 900.

In some embodiments, when the winding reel 130 rotates in the same direction, the linkage assembly 144 drives the cable-arranging assembly 140 to pivot or slide from one end of the winding reel 130 to the other end of the winding reel 130, achieving orderly releasing or winding of the cable 900 from one end of the winding reel 130 to the other end of the winding reel 130. In some embodiments, as the length of the cable 900 increases, it may be useful to make full use of the winding reel 130 to perform multilayer cable arrangement on the winding reel 130. At this time, when the winding reel 130 rotates in the same direction, the linkage assembly 144 drives the cable-arranging assembly 140 to pivot or slide back and forth between the two ends of the winding reel 130, i.e., between one end of the winding reel 130 and the other end of the winding reel 130, so that when arranging each layer of cable 900, the cable-arranging assembly 140 can be configured for limited releasing or winding from one end of the winding reel 130 to the other end of the winding reel 130. The linkage assembly 144 can adopt any transmission assembly in the related art configured to achieve reciprocating motion (e.g., a cylindrical cam, an end cam, a crank-slider assembly).

In some embodiments, as shown in FIG. 25, the cable housing 100 is further provided with a third limiting structure 111, and the third limiting structure 111 is configured to limit a limit position of the cable-arranging assembly 140. The third limiting structure 111 limits the limit position of the movement of the cable-arranging assembly 140, preventing incorrect cable-arranging of the cable 900 caused by the cable-arranging assembly 140 exceeding the limit position. In some embodiments, the third limiting structure 111 is further provided with a micro switch 112. When the cable-arranging assembly 140 moves to the limit position, the micro switch 112 is triggered, and the micro switch 112 can send an electrical signal, which indicates that the cable-arranging assembly 140 has moved to the third limiting structure 111. The electrical signal can be configured to warn the limit position of the cable-arranging assembly 140 or make corresponding responses, such as stopping releasing and winding the cable 900.

In some embodiments, as shown in FIGS. 21-25, the cable-arranging assembly 140 includes a guiding assembly 143, and the guiding assembly 143 is configured for the cable 900 to pass through. The guiding assembly 143 can guide the cable 900, and a cable-guiding wheel 1431, such as a cable-guiding pulley, can be used in the guiding assembly 143 to reduce friction and wear when the cable 900 passes through the guiding assembly 143. In some embodiments, the guiding assembly 143 is further provided with a cable retention bracket 1432 in addition to the cable-guiding wheel 1431. The cable retention bracket 1432 can be a larger frame or a smaller frame that is shaped like the cable 900. The cable retention bracket 1432 is configured to limit the cable 900 on the cable-guiding wheel 1431, which may help reduce the possibility of the cable 900 contacting other structures except the cable-guiding wheel 1431. In some embodiments, as shown in FIG. 24, the guiding assembly 143 includes a pair of cable-guiding wheels 1433, and each of the pair of cable-guiding wheels 1433 defines a third cable groove. At this time, the cable 900 passes through the third cable grooves at a tangent position of the pair of cable-guiding wheels 1433. A space defined by two third cable grooves at the tangent position can limit a position of the cable 900, which may help reduce the friction between the cable 900 and other structures.

In some embodiments, a motion detection apparatus is further included, and the motion detection apparatus is configured to detect a current motion position of the cable-arranging assembly 140. By detecting the current motion position of the cable-arranging assembly 140 and combining with a pre-known parameter such as a transmission ratio of the linkage assembly 144, the diameter of the winding reel 130, or the diameter of the cable 900, it is possible to determine the number of revolutions of the winding reel 130 when releasing or winding the cable 900, a length of the cable 900 when releasing the cable 900, a length of the cable 900 when winding the cable 900, and an arrangement position of the cable 900 on the winding reel 130, etc., may be inferred.

In some embodiments, when the cable-arranging assembly 140 pivots, the motion detection apparatus may be the magnetic ring 1414 or the magnetic member 1415 in some of the foregoing embodiments. When the cable-arranging assembly 140 slides, the motion detection apparatus may include the magnetic member 1415 disposed on the sliding base 1421, and the pivoting Hall sensor 1416 disposed on the cable housing 100. By detecting magnetic field strength of the magnetic member 1415 via the pivoting Hall sensor 1416, a motion state of the sliding base 1421 and the cable-arranging assembly 140 can be known.

In some embodiments, an angle sensor and/or a revolution sensor can be disposed on a motor shaft, a reel shaft, or any transmission shaft, and configured to record a rotation angle and/or the number of revolutions of the corresponding transmission shaft, and further calculate how long the cable 900 of the current output device has been pulled out based on a transmission ratio between the transmission shaft and the reel shaft, and a periphery of the reel shaft.

In some embodiments, one or more of the technical solutions of the universal cable outlet assembly 120, the technical solution of the winding reel 130 to fix the cable 900, the solution of arranging the cable on the winding reel 130 via the cable-arranging assembly 140, the solution of coupling the connecting structure 200 with the base 400, the solution of the connecting busbar 520 in the motor 500, and the solution of the battery 610 can be applied not only to the output device but also to the corresponding structures of other fitness equipment.

The description with reference to terms such as "an embodiment", "some embodiments", "specifically", or "some examples" means that a specific feature, structure, material, or characteristic described in conjunction with the embodiment or example is included in at least one embodiment or example of the present disclosure. In this specification, the exemplary expressions of the above terms do not necessarily refer to the same embodiment or example. Moreover, the described specific features, structures, materials, or characteristics may be combined in any one or more embodiments or examples in a suitable manner.

Although the embodiments of the present disclosure have been shown and described, those having ordinary skill in the art can understand that various changes, modifications, substitutions, and variations may be made to the embodiments without departing from the principle and spirit of the present disclosure, and the scope of the present disclosure is defined by the claims and their equivalents.

## Claims

1. A winding reel (130), **characterized by** comprising:
a winding disc (138), having a plurality of winding positions (1381), wherein the plurality of winding positions (1381) are configured to wind an end of a cable (900), and the end of the cable (900) is fixed to the winding disc (138); and
a reel body (136), wherein the winding disc (138) is mounted on the reel body (136), and the reel body (136) is configured to wind a remaining portion of the cable (900).

2. The winding reel (130) according to claim 1, wherein the winding disc (138) comprises a first side surface (1382) and a second side surface (1383) opposite to each other, the plurality of winding positions (1381) comprise a plurality of through holes (1381a) arranged at intervals, and a corresponding one of the plurality of through holes (1381a) is in communication with the first side surface (1382) and the second side surface (1383); and
the corresponding one of the plurality of through holes (1381a) is configured for the cable (900) to pass through.

3. The winding reel (130) according to claim 2, wherein at least one of the following is satisfied:
the plurality of winding positions (1381) further comprise a plurality of cable channels (1381e) defined on the first side surface (1382) of the winding disc (138), and both ends of a corresponding one of the plurality of cable channels (1381e) are in communication with corresponding two of the plurality of through holes (1381a) on the first side surface (1382); or
the winding positions (1381) further comprise a plurality of cable channels (1381e) defined on the second side surface (1383) of the winding disc (138), and both ends of a corresponding one of the plurality of cable channels (1381e) are in communication with corresponding two of the plurality of through holes (1381a) on the second side surface (1383).

4. The winding reel (130) according to claim 3, wherein a portion of the plurality of cable channels (1381e) extends longitudinally, and another portion of the plurality of cable channels (1381e) extends transversely.

5. The winding reel (130) according to claim 3, wherein the corresponding one of the plurality of cable channels (1381e) is a groove or a through slot defined on at least one of the first side surface (1382) or the second side surface (1383).

6. The winding reel (130) according to claim 3, wherein the winding disc (138) further comprises a base plate (1381f) and a plurality of convex plates (1381b), the plurality of convex plates (1381b) are arranged on the base plate (1381f) and protrude toward the first side surface (1382) or the second side surface (1383), and the corresponding one of the plurality of cable channels (1381e) is defined between adjacent ones of the plurality of convex plates (1381b).

7. The winding reel (130) according to claim 1, wherein at least one of the following is satisfied:
the winding disc (138) is arc-shaped, the reel body (136) is provided with a mounting position (1367), and the winding disc (138) is mounted on the mounting position (1367); or
the winding reel (130) further comprises a protective cover (139), the protective cover (139) is covered on the winding disc (138), and a cable outlet (139a) is further defined on the protective cover (139) and configured for the cable (900) to pass through; and
an outer side of the winding disc (138) or an outer side of the protective cover (139) is tangent to an outer peripheral surface of the reel body (136).

8. The winding reel (130) according to claim 7, wherein at least one of the following is satisfied:
a side of the protective cover (139) facing the winding disc (138) is provided with a first protruding portion (139b), and the first protruding portion (139b) is configured to press the cable (900); or
a second protruding portion is provided on a side of the mounting position (1367) facing the winding disc (138), and the second protruding portion is configured to press the cable (900).

9. The winding reel (130) according to claim 7, wherein a positioning protrusion is provided on an inner side of the protective cover (139), and a positioning groove is defined on at least one of the winding disc (138) or the mounting position (1367) and corresponds to the positioning protrusion.

10. The winding reel (130) according to claim 1, wherein the plurality of winding positions (1381) comprise a plurality of notches (1381d) defined on opposite sides of the winding disc (138), and the plurality of notches (1381d) are configured to allow an end portion of the cable (900) to be wound around in sequence.

11. The winding reel (130) according to claim 10, wherein a cable channel (1381e) is defined between adjacent ones of the plurality of notches (1381d), and the cable channel (1381e) is configured to accommodate the cable (900).

12. The winding reel (130) according to claim 1, wherein the winding disc (138) comprises a first side surface (1382) and a second side surface (1383) opposite to each other; and
at least one cable channel (1381e) is defined on at least one of the first side surface (1382) or the second side surface (1383) of the winding disc (138), and the at least one cable channel (1381e) is configured to accommodate the cable (900).

13. The winding reel (130) according to claim 12, wherein at least one of the following is satisfied:
the cable channel (1381e) is defined in a zigzag manner; or
the cable channel (1381e) is defined on each of the first side surface (1382) and the second side surface (1383) of the winding disc (138), at least one through via is further defined on the winding disc (138) or at least one notch (1381d) is further defined on a side of the winding disc (138), and the at least one through via or the at least one notch (1381d) is configured to be in communication with the cable channels (1381e) on each of the first side surface (1382) and the second side surface (1383).

14. The winding reel (130) according to claim 1, wherein the winding disc (138) is in a fishbone-like structure.

15. An output device, **characterized by** comprising:
a motor (500) and a battery (610), wherein the battery (610) is electrically connected to the motor (500) and configured to supply power to the motor (500); and
the winding reel (130) according to any one of claims 1-14;
wherein the winding reel (130) is connected to the motor (500) to drive the winding reel (130) to rotate.
